(19) Europäisches Patentamt
European Patent Office
Office européen des brevets

(11) **EP 2 580 570 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(21) Anmeldenummer: **10735181.9**

(22) Anmeldetag: **10.06.2010**

(51) Int Cl.:
*G01N 3/38* (2006.01)    *G01N 3/40* (2006.01)
*G01N 15/08* (2006.01)    *G01N 3/00* (2006.01)
*G01N 3/06* (2006.01)

(86) Internationale Anmeldenummer:
**PCT/DE2010/000700**

(87) Internationale Veröffentlichungsnummer:
**WO 2011/153973 (15.12.2011 Gazette 2011/50)**

(54) **VERFAHREN ZUR BERÜHRUNGSLOSEN, ZERSTÖRUNGSFREIEN BESTIMMUNG DER HÄRTE, POROSITÄT UND/ODER MECHANISCHEN SPANNUNGEN AN WERKSTOFFEN ODER VERBUNDWERKSTOFFEN**

METHOD FOR THE CONTACTLESS, DESTRUCTION-FREE DETERMINATION OF THE HARDNESS, POROSITY AND/OR MECHANICAL STRESSES OF MATERIALS OR COMPOSITE MATERIALS

PROCÉDÉ DE DÉTERMINATION NON DESTRUCTIVE SANS CONTACT DE LA DURETÉ, DE LA POROSITÉ ET/OU DE CONTRAINTES MÉCANIQUES DE MATÉRIAUX OU DE COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**17.04.2013 Patentblatt 2013/16**

(73) Patentinhaber: **Fraunhofer-Gesellschaft zur Förderung der angewandten Forschung e.V.**
**80686 München (DE)**

(72) Erfinder:
• **SCHREIBER, Jürgen**
**01189 Dresden (DE)**
• **BENDJUS, Beatrice**
**01187 Dresden (DE)**
• **CIKALOVA, Ulana**
**01097 Dresden (DE)**

• **KHILO, Nikolai**
**220117 Minsk (BY)**

(74) Vertreter: **Grambow, Uwe**
**Pfenning, Meinig & Partner GbR**
**Patent- und Rechtsanwälte**
**An der Frauenkirche 20**
**01067 Dresden (DE)**

(56) Entgegenhaltungen:
**EP-A1- 1 746 385     US-B2- 6 943 870**

• **DATABASE WPI Week 200977 Thomson Scientific, London, GB; AN 2009-Q70789 XP002619479, -& RU 2 371 700 C1 (AS BELO PHYS INST) 27. Oktober 2009 (2009-10-27)**
• **AGNENI A ET AL: "IMAGE PROCESSING FOR FRINGE UNWRAPPING IN SPECKLE INTERFEROMETRY", PROCEEDINGS OF SPIE, SPIE, USA, Bd. 4062, 1. Januar 2000 (2000-01-01), Seiten 1479-1484, XP009013922, ISSN: 0277-786X, DOI: DOI:10.1117/12.385403**

**Beschreibung**

Die Erfindung betrifft ein Verfahren zur berührungslosen, zerstörungsfreien Bestimmung der Härte, Porosität und/oder mechanischen Spannungen an Werkstoffen oder Verbundwerkstoffen mittels Speckle-Photometrie. Sie kann für die Bestimmung mechanischer Eigenschaften an metallischen, keramischen und organischen Kompakt- und Faserverbundwerkstoffen eingesetzt werden. Dies kann sowohl im Labor aber auch unter Betriebsbedingungen in kurzer Zeit durchgeführt werden. Die Erfindung ist online-fähig und kann während des Einsatzes bzw. Betriebes an Bauteilen durchgeführt werden. Es können aber auch Herstellungsprozesse effektiv kontrolliert und überwacht werden.

Für in kurzer Zeit durchführbare Prüfverfahren zur Charakterisierung von Werkstoffen und zur Überwachung von Fertigungsprozessen gibt es bereits optische Lösungsvorschläge.

Die Charakterisierung thermo-mechanischer Eigenschaften von Materialien oder Werkstoffen durch optische zerstörungsfreie Prüfverfahren wird bisher jedoch noch nicht, zumindest mit ausreichender Genauigkeit, durchgeführt.

Für eine Bewertung des Spannungs- und Schädigungszustands metallischer Werkstoffe wurden verschiedene Parameter des magnetischen Barkhausenrauschens herangezogen. Das Verfahren der Barkhausenrausch-messung kann nur an ferromagnetischen Werkstoffen genutzt werden. Da der Sensor im direkten Kontakt aufgesetzt wird, sind Messungen aufgrund seiner Temperaturempfindlichkeit nur bis etwa 70°C möglich.

Ein lokales Erwärmen verursacht eine thermische Ausdehnung der geprüften Oberfläche. Durch die Charakterisierung der Veränderungen an der Oberfläche, die durch diese lokale thermische Ausdehnung entstanden sind, können Aussagen zum Materialzustand, z.B. der Härte, Porosität und dem Schädigungszustand getroffen werden. Die zeitlichen Veränderungen im Rauhigkeitsprofil, die als Folge des Temperaturflusses an der Probenoberfläche entstehen, lassen sich durch die zeitlichen Veränderungen in einem Speckle-Muster durch optische Detektion charakterisieren.

Außerdem gibt es in der jüngeren Vergangenheit Ansätze zur Nutzung der Speckle-Photometrie als optisches Messverfahren. Dadurch sollen kleinste Verschiebungen und Änderungen der Form eines Objekts, auch dreidimensional (EP 1746 385 A1), oder zur Deformations- und Verformungsmessung an Bauteilen und Mikroarrays benutzt werden, wie dies in EP 1400 779 A1 beschrieben ist. Mit dieser Methode sind Defekte an Bauteilen entsprechend EP 1472 531 A1 und Risse z.B. für Reaktorkerne detektierbar.

Für eine berührungslose Bestimmung der Härte an zumeist metallischen Werkstoffen mittels photothermischer Messverfahren, ist insbesondere die Infrarotradiometrie bekannt. Dabei wird der Zusammenhang der Wärme- und Temperaturleitfähigkeit des Werkstoffs mit seinen mechanischen Eigenschaften, wie z.B. der Härte genutzt. Es wurde festgestellt, dass die Härte mit der Wärme- und Temperaturleitfähigkeit umgekehrt proportional korreliert.

Aus der US 2008/0317090 A1 ist die zerstörungsfreie thermografische zur Messung der Probendicke und der Porosität für Kompositwerkstoffe, wie sie im Flugzeugbau eingesetzt werden, beschrieben. Das Verfahren basiert auf der Ausbreitung des lateralen Wärmestroms an der Oberfläche des geprüften Objekts und ermittelt genaue Temperatur-Zeit-Abhängigkeiten. Als Korrelationsgröße zur quantitativen Bewertung der thermischen Diffusivität und der Porosität wurde die thermische "time of flight"- Konstante angewendet. Dabei ist es nachteilig, dass der Messaufbau dieser Methode sehr aufwendig ist, so dass sich Anwendungen auf den Labormaßstab beziehen und ein industrieller Einsatz für schnelle und robuste Messungen ausgeschlossen ist.

Desweiteren ist aus RU 2 371700 C1 ein Verfahren zur Bestimmung der Härte von Produkten aus Stahl bekannt.

Es ist daher Aufgabe der Erfindung ein berührungsloses, zerstörungsfreies Messverfahren für die Bestimmung unterschiedlicher Parameter von Werkstoffen oder Verbundwerkstoffen vorzuschlagen, das kostengünstig, in kurzer Zeit durchführbar und mit dem dabei eine gute Messgenauigkeit erreichbar ist.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren wird kohärente elektromagnetische Strahlung mit einem definierten Einfallswinkel auf einen Oberflächenbereich eines Bauteils oder einer Probe gerichtet. Der zum Beleuchten bestrahlte Oberflächenbereich wird auf einer mindestens zweidimensionalen Arrayanordnung optischer Detektoren abgebildet. Hierfür kann eine einfache und kostengünstige CCD-Kamera eingesetzt werden, die ein ausreichend großes zeitliches Aufnahmevermögen aufweisen sollte. Dabei erfolgt eine thermische und/oder mechanische Aktivierung am Bauteil oder der Probe in einem Abstand zum bestrahlten Oberflächenbereich. Mit der Arrayanordnung wird die Intensität von Speckle elektromagnetischer Strahlung, die in Folge der Bestrahlung von der Oberfläche emittiert wird, zeit- und ortsaufgelöst detektiert. Aus den so zeit- und ortsaufgelöst erfassten Intensitätsmesswerten wird die Speckle-Diffusivität K bestimmt. Mit der bestimmten Speckle-Diffusivität K und vorab mit einem anderen Messverfahren für den jeweiligen Werkstoff oder Werkstoffverbund bestimmten Referenzwerten wird dann die jeweilige Härte, Porosität und/oder mechanische Spannung bestimmt.

Die Erfindung kann für die unterschiedlichsten Werkstoffe und Verbundwerkstoffe, wie z. Faserverbundwerkstoffe, eingesetzt werden.

Die Intensität der von Speckle elektromagnetischer Strahlung, die in Folge der Bestrahlung von der Oberfläche emittiert wird, sollte bei mindestens zwei Zeitpunkten bestimmt werden. Eine häufigere Bestimmung innerhalb eines kleinen Zeitintervalls ist für eine erhöhte Genauigkeit jedoch günstiger.

Die ortsaufgelöste Bestimmung soll mindestens zweidimensional in der Ebene der Oberfläche des Bauteils oder der Probe durchgeführt werden, um eine ausreichende Messgenauigkeit zu erreichen. Es ist aber auch eine dreidimensionale Bestimmung möglich. In diesem Fall kann die Arrayanordnung zusätzlich definiert bewegt werden, so dass die Abbildung des bestrahlten Oberflächenbereichs aus unterschiedlichen Positionen und/oder Richtungen detektierbar ist.

Die elektromagnetische Strahlung sollte mit einem Einfallswinkel von 45° ± 20° in Bezug zur Oberfläche des Bauteils oder der Probe auf den bestrahlten Oberflächenbereich gerichtet werden. Dabei sollte eine Reflexion der auf die Oberfläche gerichteten elektromagnetischen Strahlung vollständig, zumindest jedoch zu einem erheblichen Anteil vermieden werden. Der Einfallswinkel ist auf die optische Achse der eingesetzten Strahlung bezogen, was auf divergente, fokussierte und selbstverständlich kollimierte Strahlung zutrifft. Kollimierte Strahlung hat den Vorteil, dass die Strahlung an jeder Position des bestrahlten Oberflächenbereichs mit dem gleichen Einfallswinkel auftrifft.

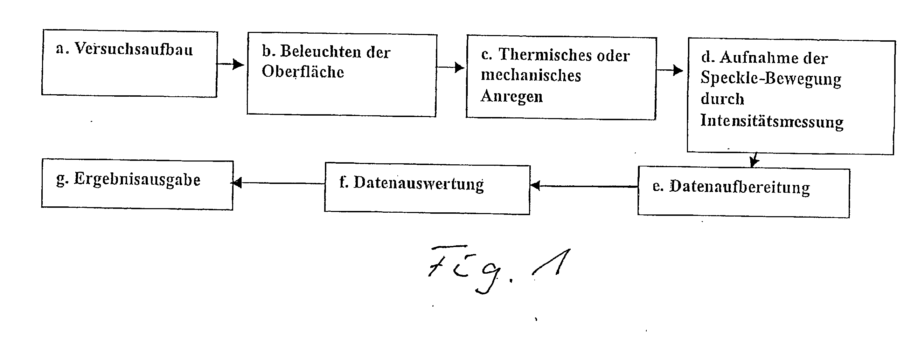

In Figur 1 ist anhand eines Flussdiagramms beispielhaft der Ablauf einer Messung mittels Speckle-Photometrie dargestellt, wie sie bei der Erfindung für die Bestimmung der Härte, der Porosität und/oder mechanischer Spannungen durchgeführt werden kann.

Bei der Durchführung des Verfahrens wird die Messstelle durch Bestrahlung mit kohärenter elektromagnetischer Strahlung beleuchtet. Gleichzeitig wird in einem Abstand zur so beleuchteten Oberfläche durch einen Energieeintrag eine thermische Aktivierung durchgeführt, um das Bauteil oder die zu untersuchende Probe in einem Abstand zum bestrahlten Oberflächenbereich zu erwärmen. In Folge der Wärmeleitung treten charakteristische Speckle-Bewegungen auf, die als Folge von Bildern der bestrahlten Fläche mit einer CCD-Kamera als Beispiel für eine Arrayanordnung aufgenommen und mit einer angeschlossenen elektronischen Auswerteeinheit ausgewertet werden können. Die so erfassten Aufnahmen können für die weiteren Auswertungen aufbereitet werden. Als Ergebnis erhält man einen Äquivalent-Wert zur gesuchten Werkstoffeigenschaft, d.h. in einem Fall kann die Härte bestimmt werden. Mit einer bei der Erfindung einsetzbaren Arrayanordnung oder CCD-Kamera muss nicht der gesamte bestrahlte Oberflächenbereich berücksichtigt werden. Es genügt eine ausreichend große Fläche, innerhalb derer die sich verändernden Intensitäten der gestreuten Strahlung, die als Speckle optisch detektiert werden können, erfasst werden.

Für die Bestrahlung der Oberfläche kann von einer Laserlichtquelle emittierte kohärente elektromagnetische Strahlung eingesetzt werden. Die Wellenlänge muss nicht zwingend unter Berücksichtigung der Oberflächenrauheit der detektierten Oberfläche ausgewählt werden. Die thermische Aktivierung, insbesondere eine lokale Erwärmung der Probenoberfläche kann kontinuierlich oder gepulst in einem Abstand zum bestrahlten Oberflächenbereich durchgeführt werden. Der Abstand kann unter Berücksichtigung des Temperaturgradienten und/oder der thermischen Leitfähigkeit des zu untersuchenden Werkstoffs gewählt werden. Es sollte ein Abstand der Position an der die Aktivierung erfolgt eingehalten werden, der eine unmittelbare direkte und zeitgleiche Beeinflussung des Werkstoffs im bestrahlten Bereich vermeidet. Zur Erwärmung kann beispielsweise ein $CO_2$-Laser eingesetzt werden. Für die Aufnahme der Speckle-Dynamik kann eine beliebige CCD-Kamera mit variabler Bildaufnahmegeschwindigkeit eingesetzt werden. Mit zusätzlichen optischen Elementen, die vor der CCD-Kamera angeordnet sein können, kann eine Vergrößerung der Abbildung erreicht werden.

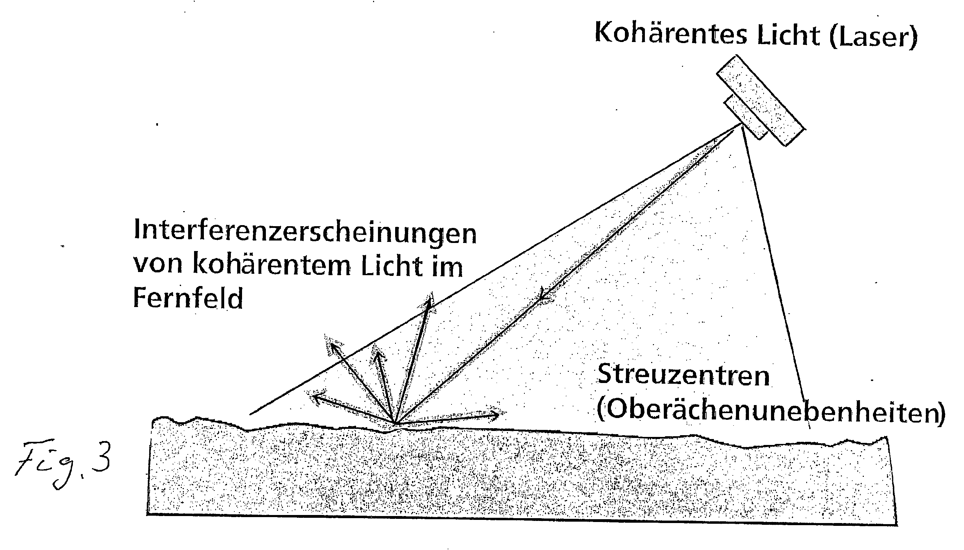

Die erfass- und auswertbaren Speckle-Bilder entstehen bei kohärenter Beleuchtung einer optisch rauen Oberfläche mit elektromagnetischer Strahlung, die unter einem definierten Einfallswinkel auf die Oberfläche auftrifft. Die Unebenheiten der Oberfläche bilden dabei Streuzentren, von denen Kugelwellen unterschiedlicher Phase ausgehen, die im Fernfeld interferieren, was in Figur 3 erkennbar ist. Es tritt eine räumliche Struktur mit zufällig verteilten Intensitätsminima und -maxima auf, die als ein Speckle-Bild bezeichnet werden kann.

Zur Bestrahlung kann elektromagnetische Strahlung mit Wellenlängen im sichtbaren bis nahen infraroten Bereich eingesetzt werden. Bei Untersuchungen wurde hauptsächlich eine He-Ne-Laserquelle (Wellenlänge $\lambda$ = 663 nm, Leistung 10 mW, Stahldurchmesser 1 mm) eingesetzt. Der Laserstrahldurchmesser kann durch die Benutzung entsprechender Sammel- oder Streulinsen variiert werden. Beim erfindungsgemäßen Verfahren können auch andere, z.B. eine blaue Laserquelle ($\lambda$=405 nm) oder eine Infrarotlaserquelle ($\lambda$=1064nm) eingesetzt werden.

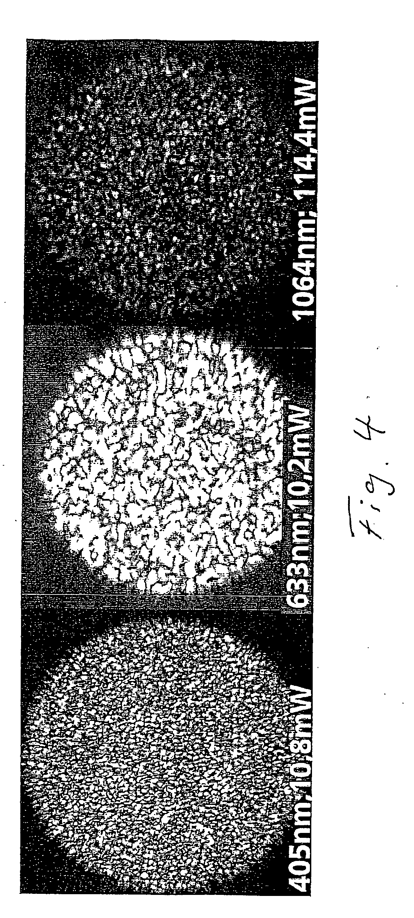

Die bei Bestrahlung mit den unterschiedlichen Wellenlängen erfassten Speckle-Muster zeigt Figur 4. Dabei sind scharfe lokale Helligkeitsmaxima an Positionen, an denen Strahlung von verschiedenen Oberflächenbereichen interferiert, erkennbar. Der Durchmesser eines Speckles ist proportional zur Wellenlänge der eingesetzten elektromagnetischen Strahlung. Der Durchmesser und die Intensität eines einzelnen Speckles werden außerdem von der Rauhigkeit der Probenoberfläche beeinflusst. Je rauer die Oberfläche ist, desto niedriger ist die Intensität und umso größer der Kontrast. Durch die Wahl einer Laserquelle mit geeigneter Wellenlänge zum Bestrahlen, ist es beispielsweise möglich, die Härte unabhängig von der Oberflächenrauhigkeit zu bestimmen, da zusätzlich die Speckle-Intensität mittels einer geeigneten Auswertesoftware angepasst werden kann. Ausnahmen bilden ideal reflektierende Oberflächen sowie optisch transparente Materialien, die bei der Erfindung nicht einsetzbar sind. Dies ist aber durch Auftrag einer geeigneten, diese Eigenschaften der Oberfläche nicht aufweisenden dünnen Schicht vermeidbar.

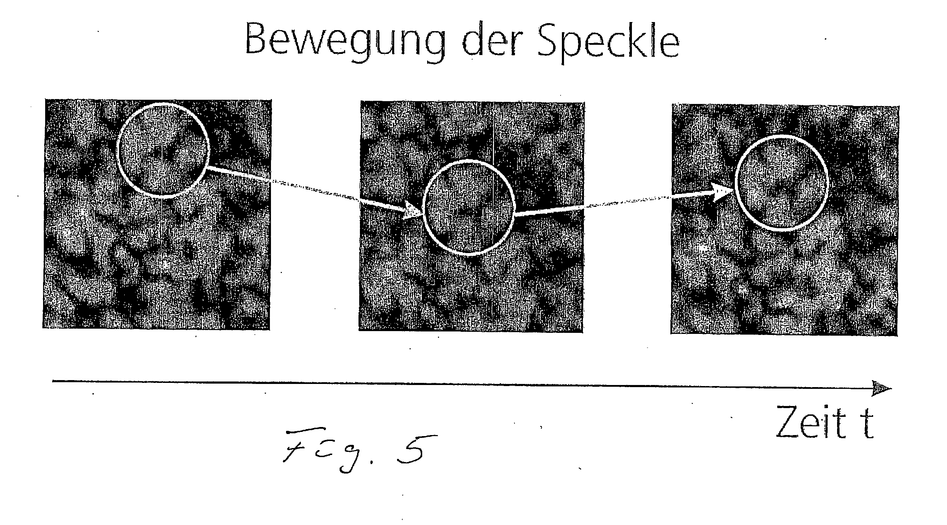

Die lokale thermische Aktivierung kann auch mit einer Flamme, induktiv oder mit der Hilfe anderer lokaler Wärmequellen durchgeführt werden. Die sich ausbreitende Wärme führt lokal zu unterschiedlich starker thermischer Ausdehnung. Es bilden sich örtlich und zeitlich abhängige Dehnungsfelder an der Werkstoffoberfläche. Eine raue Oberfläche reagiert unter dieser Anregung mit der Veränderung der Neigung der Oberflächennormale und der absoluten Höhe der Oberflächenrauheit. Diese räumlich-zeitlichen Veränderungen enthalten Informationen über den Werkstoffzustand. Abbilder dieser thermisch stimulierten Verschiebungsfelder auf der Oberfläche sind die zeitlich aufgelösten Speckle-Aufnahmen. In Figur 5 sind solche Änderungen in der Speckle-Struktur erkennbar. Die Art und die Länge der Erwärmung (Energie und Leistung) bestimmen die Anregung der Tiefe im Bauteil/Probe, aus der auswertbare Informationen erfasst werden können.

Die Aufnahme der Speckle-Bewegungen kann mittels einer CCD-Kamera erfolgen, die mindestens 20 Bilder/Sekunde aufnehmen kann. Höhere Bilderfassungsraten sind vorteilhaft. Bilderfassungsraten größer 200 Bilder/Sekunde verursachen jedoch große Datenmengen, die aufwändig ausgewertet werden müssen. Für die Reduzierung des erforderlichen Speicherplatzes sollte es möglich sein, mittels geeigneter Kamera-Software die Bildfrequenz und Bildergröße zu verändern. Hilfreich sind Funktionen wie eine automatische Bildoptimierung und die Einstellung des Pixeltakts und der Belichtungszeit. Es kann eine monochromatische oder Farb-CCD-Kamera verwendet werden.

Die den Speckle-Bewegungen entsprechenden Messsignale, insbesondere die erfassten Grauwerte, sollten für die weitere Auswertung entsprechend vorbereitet werden. Die erfasste Bildfolge kann zuerst in einzelne Bilder mit Hilfe eines geeigneten Programms (hier: Virtual - Dub V 1.9.7.) geteilt und die einzelnen Bilder als bmp-Format in Graustufen gespeichert werden. Jedes Einzelbild kann dann auf eine Größe von 100 x 100 Pixel reduziert werden. Der letzte Schritt kann durch eine angepasste Kameraeinstellung ersetzt werden.

Im Zeitverlauf ändern sich die Lage und Helligkeit der Speckles, bedingt durch die Änderungen der Dehnungsfelder der Oberfläche während der Ausbreitung der lokal eingebrachten Wärme. Der Oberflächenzustand und damit die konkreten Speckle-Bilder sind Funktionen der Dehnungsfelder $\varepsilon_{i,j}(t,R)$ (t - die Zeit, R der Ort der Messung und i,j - jeweils die Koordinatenachsen x,y) in der Probe. Diese wiederum sind über die Gleichung (1) der thermischen Ausdehnung mit der Temperatur T(t,R) und über die elastischen Gesetze mit den mechanischen Spannungen $\sigma_{i,j}(t,R)$ verbunden:

$$\varepsilon_{i,j}(t,R) = \sum_{k,l} S_{i,j,k,l} \cdot \sigma_{k,l}(t,R) + \alpha_{i,j}(T(t,R) - T_0) \quad (1)$$

Dabei ist $S_{i,j,k,l}$ eine Konstante (das Reziproke der elastischen Konstanten) und $T_0$ die Umgebungstemperatur. Die lokal eingebrachte Wärmemenge verteilt sich in Zeit und Raum über die Probe nach der Thermodiffusionsgleichung

$$\frac{\partial T(t,x,y,z)}{\partial t} = K_T \left( \frac{\partial^2 T(t,x,y,z)}{\partial x^2} + \frac{\partial^2 T(t,x,y,z)}{\partial y^2} + \frac{\partial^2 T(t,x,y,z)}{\partial z^2} \right)$$

$$(2)$$

Um geeignete Informationen zur Härte aus den Intensitäten der Speckle-Bilder abzuleiten, soll die Speckle-Diffusivität "K" herangezogen werden:

$$K(t) = \frac{\frac{\partial I(t,x,y,z)}{\partial t}}{\frac{\partial^2 I(t,x,y,z)}{\partial x^2} + \frac{\partial^2 I(t,x,y,z)}{\partial y^2} + \frac{\partial^2 I(t,x,y,z)}{\partial z^2}} \quad (3)$$

I = I(t,x,y,z) ist hier die Intensität der Speckle als Funktion der Zeit und Messkoordinaten x,y,z am Messort. Bei der Aufnahme mit einer zweidimensionalen CCD-Kamera oder einer Arrayanordnung optischer Detektoren entfällt in der Regel die z-Koordinate. Diese dritte Dimension kann aber falls gewünscht oder erforderlich, durch definierte und bei der Auswertung zu berücksichtigende Bewegung der Kamera oder Arrayanordnung erfasst werden.

Da die zeitlichen Veränderungen von I(t) durch die Dehnungen $\varepsilon = \varepsilon i,j(t,R)$ gegeben sind, können die Ableitungen in Gleichung (3) wie folgt geschrieben werden:

$$K(t) \cong \frac{\sum_{\varepsilon} \partial I(t) / \partial\varepsilon \cdot (S \cdot \frac{\partial}{\partial t}\sigma(t) + \alpha \cdot \frac{\partial}{\partial t}T(t))}{\sum_{\varepsilon} \partial I(t) / \partial\varepsilon (\partial^2\varepsilon(t,R) / \partial x^2 + \partial^2\varepsilon(t,R) / \partial y^2)} \quad (4)$$

wobei z.B.

$$\sum_{\varepsilon} \partial I(t) / \partial\varepsilon \cdot S \cdot \frac{\partial}{\partial t}\sigma(t) = \sum_{i,j} \partial I(t) / \partial\varepsilon_{i,j} S_{i,j,k,l} \cdot \frac{\partial}{\partial t}\sigma_{k,l}(t) \quad (5)$$

Die Verwendung von Quotienten der Ableitungen der Speckle-Intensitäten hat den großen Vorteil, dass sich bestimmte Einflüsse der bei der Ableitung auftretenden Terme

$$\partial I / \partial\varepsilon_{i,j}(t,R)$$

wegkürzen, dies ist z.B. ein ortsunabhängiger Skalenfaktor, wie die Intensität der Laserstrahlung.

Der ebenfalls auftauchende Term

$$\partial I^2 / \partial\varepsilon^2_{i,j}(t,R)$$

kann vernachlässigt werden, da im Rahmen einer linearen Theorie (Hook'sches Gesetz) quadratische Ausdrücke in $\varepsilon i,j(t, R)$ nicht berücksichtigt werden müssen.

Anstelle der Ableitungen in Gl. (3) könnte auch eine Speckle-Geschwindigkeit Vx (Gl. (6)) berücksichtigt werden.

$$V_x = \frac{\partial I / \partial t}{\partial I / \partial x} \quad (6)$$

Für die Härtebestimmung soll der Betrag der Speckle-Diffusivität K benutzt werden.

Als Ergebnis erhält man einen Betragswert der Speckle-Diffusivität K nach Gleichung (3). Es konnte eine direkte Korrelation des Parameters K mit den mechanischen Kenngrößen und ebenfalls mit der Temperaturleitfähigkeit festgestellt werden. Durch die Umrechnung der Einheiten kann aus der Speckle-Diffusivität K zusätzlich die Temperaturleitfähigkeit in m2/s berechnet werden. Die Voraussetzung dafür ist, dass die Veränderungen der Speckle in z-Achsrichtung berücksichtigt werden. Um den gemessenen Werten der Speckle-Diffusivität K einem bestimmten Härtewert des untersuchten Werkstoffs zuordnen zu können, ist eine Kalibrierung für die untersuchten Werkstoffe erforderlich. Hierzu wird an Proben aus dem gleichen Werkstoff die mechanische Härte mit anderen etablierten Messverfahren, beispielsweise nach Vickers, Rockwell oder Brinell gemessen. Anschließend wird an denselben Proben der Parameter Speckle-Diffusivität K und somit eine Kalibrierfunktion der entsprechenden Regressionsgeraden bestimmt.

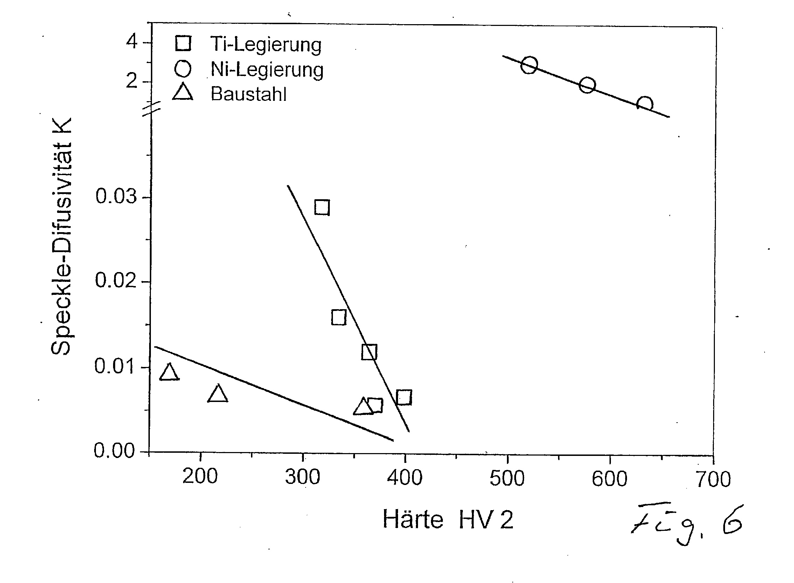

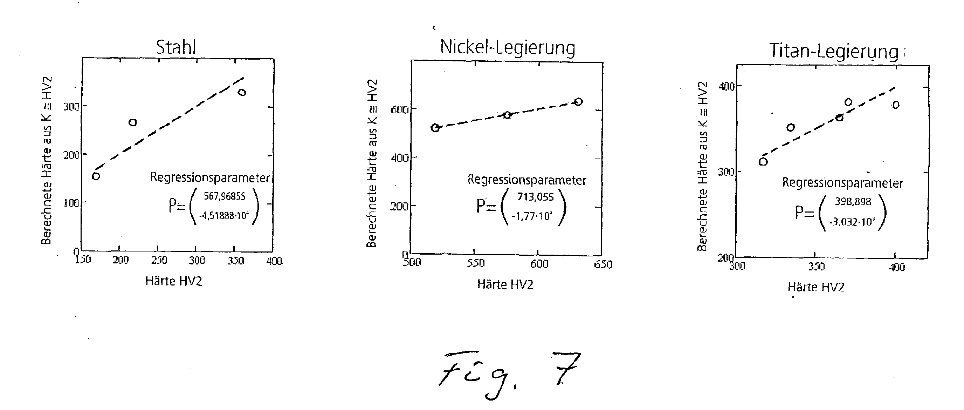

Ergebnisse solcher Untersuchungen zeigt beispielhaft Figur 6. Es ist deutlich zu sehen, dass der Betrag der Speckle-Diffusivität K mit steigender Härte abnimmt. Dazu wurden Fe-C-Legierungen (Stahl) mit unterschiedlichen Kohlenstoffanteilen untersucht. Die Härtewerte der Ti- und Ni-Legierungen sind bei den untersuchten Proben durch Oberflächenverfestigung mittels Kugelwalzen und Sandstrahlen entstanden. Mit Hilfe der nach den durchgeführten Intensitätsmessungen an Speckle ermittelten Werte der Speckle-Diffusivität K und den mechanisch vorab an Vergleichsproben gemessenen Härtewerten HV2 wurde für jeden untersuchten Stahl und die beiden Legierungen als zu untersuchendem Werkstoff die Regressionsgerade berechnet. Die Parameter dieser Regressionsgeraden sind in einzelnen Diagrammen für jeden untersuchten Stahl und die Legierungen in Figur 7 eingefügt. Durch Rückrechnung wurde aus der Speckle-Diffusivität K und den Regressionsparametern die Härte des geprüften Baustahls bzw. die Oberflächenhärte der Ni- und Ti- Legierung bestimmt. Figur 7 zeigt die Korrelation der experimentellen Werte der Härtemessung (Kreise) und der aus der Kalibrierung berechneten Härte (gestrichelte Linie).

Die Ermittlung der Porosität erfolgt ebenfalls nach dem Flussdiagramm, wie es in Figur 1 gezeigt ist.

Die Bestrahlung der Oberfläche des zu untersuchenden Bauteils oder der Probe erfolgt analog zur Härtemessung. Die Größe des bestrahlten Oberflächenbereichs kann an den jeweiligen Werkstoff oder Verbundwerkstoff angepasst werden. Die bestrahlte Oberfläche sollte bei grob strukturierten Werkstoffen, das heißt solche mit großen Partikeln oder Poren, größer als bei feineren Oberflächen mit kleineren Partikeln oder Poren sein.

Auch die thermische Aktivierung kann, wie bereits bei der Bestimmung der Härte erläutert, durchgeführt werden.

Das Ergebnis wird analog zur Härtemessung angegeben. Dabei ergibt sich eine Korrelation des Betrags der Speckle-Diffusivität K zur Porosität des Werkstoffes. Die quantitative Bewertung verschiedener Porositäten eines Werkstoffs ist mittels einer Kalibrierung der berechneten Werte für die Speckle-Diffusivität K an die mit anderen Messverfahren bestimmten Porositäten möglich. Hierfür geeignete Messverfahren sind beispielsweise:

- Geometrische Bestimmung des Volumens und Wiegen der Probe. Aus der so ermittelten Dichte ρ kann mittels der Beziehung

$$\Phi = 1 - \frac{\rho}{\rho_0}$$

die Porosität $\Phi$ mit $\rho_0$ als Dichte des absolut dichten Materials bestimmt werden.

- Bestimmung nach dem "Archimedischen Prinzip".

- Bestimmung der Porosität, insbesondere der geschlossenen, an Hand metallographischer Schliffbilder durch Bildauswertung.

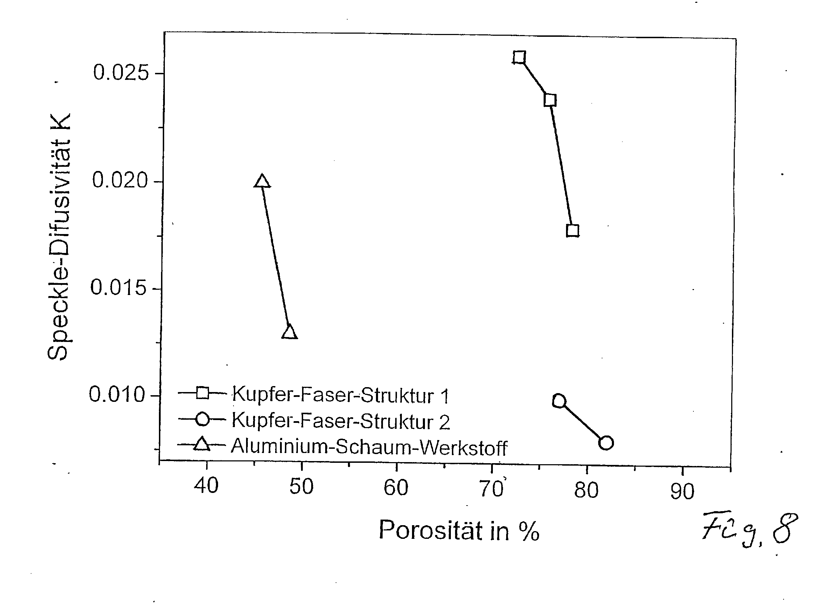

Ein Beispiel für die Korrelation der Porosität mit dem Betrag der Speckle-Diffusivität K ist in Figur 8 verdeutlicht. Der Wert der Speckle-Diffusivität K nimmt mit zunehmender Porosität ab. Das erfindungsgemäße Verfahren wurde bei diesem Beispiel an zwei Kupfer-Faser-Strukturen und einer Aluminium-Schaum-Struktur mit unterschiedlichen Porositäten durchgeführt.

Mit dem erfindungsgemäßen Verfahren können auch sich verändernde mechanische Spannungen an der Oberfläche von Bauteilen/Proben bestimmt werden. Das Flussdiagramm nach Figur 1 zeigt auch hierfür den Ablauf bei der Durchführung des Verfahrens. Im Unterschied zur Härte- und Porositätsbestimmung kann hier die thermische durch eine mechanische Aktivierung ersetzt oder in Kombination mit der thermischen Aktivierung eingesetzt werden.

Der Messaufbau für die mechanische Spannungsbestimmung kann sich durch die Art der Aktivierung/Anregung unterscheiden. Dabei können Kräfte in einem Abstand zum bestrahlten Oberflächenbereich am Bauteil oder der Probe wirken. Dies ist immer dann der Fall, wenn allein durch thermische Aktivierung keine für eine Detektion ausreichenden mechanischen Spannungsdifferenzen erreicht werden können. Bevorzugt können Zugkräfte wirken. Diese oder auch Druckkräfte können je nach Messaufgabe konstant gehalten oder auch als wechselnd wirkende Kräfte am Bauteil/Probe angreifen.

Infolge einer mechanischen Krafteinwirkung (Last) oder einer Temperaturänderung kommt es zu Änderungen der Probenoberfläche. Die Speckle-Diffusivität K(t) berechnet nach Gleichung (4) erfasst diese Veränderungen im Zeitverlauf. Integriert man diese Konstante von einer Startzeit to bis zur Zeit t, dann lässt sich die Veränderung der Spannung $\Delta\sigma(t,R) = \sigma(t,R) - \sigma(to,R) = \Delta\sigma(t) + \delta\sigma(t,R)$ unter Kenntnis der sich dabei veränderten Temperatur $\Delta T(t,R) = T(t,R) - T(to,R) = \Delta T(t) + \delta T(t,R)$ bestimmen. $\Delta\sigma(t)$ und $\Delta T(t)$ sind die für den Messbereich gemittelten Spannungen (Ingenieurspannungen) und Temperaturen, die Spannungs- und Temperaturschwankungen werden durch $\delta\sigma(t,R)$ und $8T(t,R)$ erfasst. Für die Ableitung der erforderlichen Bestimmungsgleichung erhält man aus GI. (4) zunächst

$$\Delta K(t) = \int_{t_0}^{t} K(t)dt \approx \frac{\sum_{\varepsilon} \overline{\partial I(t)/\partial\varepsilon} \cdot (S \cdot \frac{\partial}{\partial t}\Delta\sigma(t) + \alpha \cdot \frac{\partial}{\partial t}\Delta T(t))}{\sum \partial I(t)/\partial\varepsilon (\partial^2\varepsilon(t,R)/\partial x^2 + \partial^2\varepsilon(t,R)/\partial y^2)} + C, \quad (7)$$

wobei die Größe C die lokalen Spannungs- und Temperaturschwankungen ($\delta\sigma(t,R)$ und $\delta(t,R)$) gemäß GI (4) enthält und Anteile der zeitlichen Schwankungen von

$$\partial I(t)/\partial\varepsilon \quad \overline{\partial I(t)/\partial\varepsilon}$$

( $\overline{\partial I(t)/\partial\varepsilon}$ - zeitlicher Mittelwert) berücksichtigt sind. Für die weitere Auswertung kann weiterhin angenommen werden, dass der Schwankungsterm C als Konstante multipliziert mit der Zeitdifferenz $\Delta t$= t-to ersetzt werden kann. Im Ergebnis lässt sich GI. (7) wie folgt zusammenfassen:

$$\Delta K(t) = A \cdot \Delta\sigma(t)/E + B \cdot \alpha \cdot \Delta T(t) + C \cdot \Delta t. \quad (8)$$

Hier sind E der mittlere E-Modul und $\alpha$ der mittlere Koeffizient der thermischen Ausdehnung. Die Größen A, B und C sind zunächst unbekannt und müssen in einem geeigneten Verfahren ermittelt werden. Wenn man die Spannungsänderungen $\Delta\sigma(t)$ aus der zeitabhängigen Speckle-Diffusivität $\Delta K(t)$ bei bekannten Temperaturveränderungen $\Delta T(t)$ ermitteln will, wird GI. (8) in geeigneter Form umgestellt:

$$\Delta\sigma(t) = P_1 \cdot \Delta K(t) + P_2 \cdot E \cdot \alpha \cdot \Delta T(t) + P_3 \cdot \Delta t. \quad (9)$$

P1, P2 und P3 wurden als neue Parameter eingeführt, die durch einen Kalibrierversuch bestimmt werden können. Dazu werden am optischen Messort eine Referenzspannung, z. B. gegeben in einem Zug oder Biegeversuch, und die Temperatur benötigt.

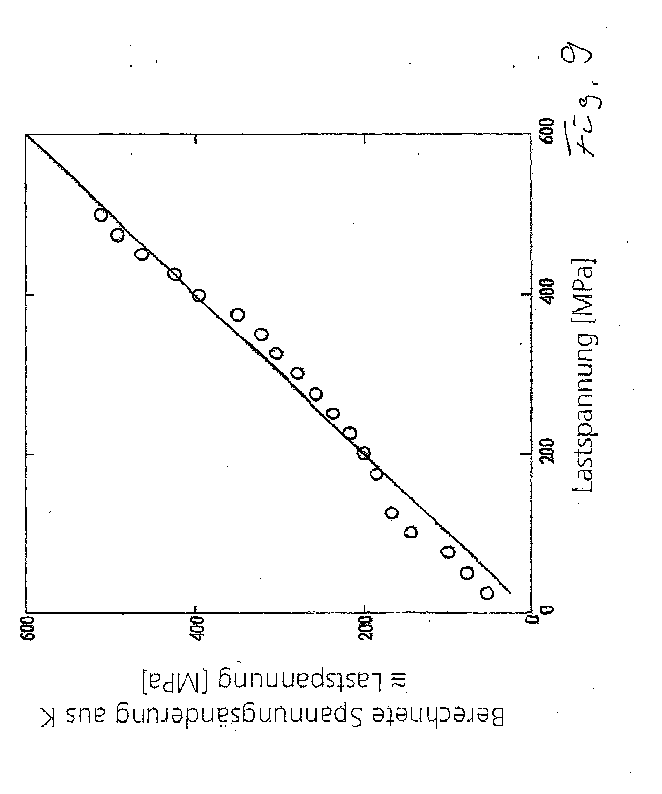

Die Ergebnisse dieser Kalibrierung sind in Figur 9 zusammengefasst. Die mechanische Spannungsbestimmung wurde während eines Zugversuchs an dem höherfesten Baustahl S355 vorgenommen.

Mit dem bei der Durchführung des erfindungsgemäßen Verfahrens einsetzbaren Messaufbau kann zusätzlich auch die Schädigung oder Ermüdung eines Werkstoffs bestimmt werden. Zur Bewertung der bei plastischer Verformung oder bei zyklischer Beanspruchung auftretenden Werkstoffschädigung kann das fraktale Verhalten der Verformungsstrukturen herangezogen werden. Diese Verformungsstrukturen bilden sich im Verlaufe der Ermüdung an der Werkstoffoberfläche und zeigen in den sich herausbildenden Oberflächentopographien "Mesostrukturen", die z.B. mit Hilfe eines Rasterkraftmikroskops vermessen werden können.

Auch die Durchführung ist weitestgehend analog zu der Bestimmung von Härte, Porosität und mechanischer Spannungen. Lediglich bei der Auswertung, wird nicht die detektierte Speckle-Diffusivität K bestimmt und berücksichtigt.

Die thermische Anregung kann hier analog zur Härtebestimmung, aber auch mechanisch, wie bei der Bestimmung mechanischer Spannungen durchgeführt werden.

Die "Mesostrukturen" sind stochastische oder nicht reguläre Strukturen, die im Zeitverlauf der Ermüdung auf verschiedenen Skalen erscheinen. Unterlegt man diese Eigenschaft einer fraktalen Analyse, so kann das Skalenverhalten charakterisiert und demzufolge auch die Schädigung bzw. der Ermüdungszustand des Werkstoffs bestimmt werden.

Die Oberflächentopografien mit Höhen Z(r) sind Funktionen des Ortes. Verändert man die Skala des Ortsvektors r gemäß r→λr, wobei r = (x,y) ein lateraler Bezugschritt ist, so kann für Systeme mit selbstähnlichen, fraktalen Strukturen Z(r) nach folgendem Skalengesetz transformiert werden:

$$Z(\lambda r) = \lambda^H \cdot Z(r) \quad \text{mit } H = 2 - D_F \quad (10)$$

Die Größe A ist ein willkürlicher Skalenparameter. Anstelle des Parameters H wird üblicherweise die fraktale Dimension DF benutzt. Bei eindimensionalen Funktionen gilt 1 < DF < 2. Ein Skalenverhalten wie in Gl. (10) ist in der Regel nur für ideale oder mathematische Fraktale im gesamten Raum bzw. für alle Zeiten erfüllt. Physikalische Fraktale hingegen weisen nur in begrenzten Bereichen ein solches Skalenverhalten auf, das aber zur Charakterisierung der Struktur in diesem 'Mesobereich' verwendet werden kann. Für eine mathematische Analyse von Messgrößen hinsichtlich ihres Skalenverhaltens eignen sich Korrelations-Funktionen. Für die Auswertung der zweidimensionalen Signale kann die Differenz-Korrelationsfunktion

$$C(\tau,q) = \left\langle (Z(t+\tau) - Z(t))^q \right\rangle \quad (11)$$

benutzt werden. Der Term <...> ist dabei die Mittelung über alle Messzeiten t bei fixiertem Wert von $\tau$. Der Exponent q gestattet es, durch Grenzwertbildung $1/q \to 0$ verschiedene Beiträge in Z(t), z.B. gerätebedingte zufällige Störeinflüsse, zu eliminieren. Im Falle fraktalen Verhaltens folgt aus Gl (11)

$$C(\tau) \approx \tau^{q \cdot H(q)}. \quad (12)$$

Aus Gl (12) und der Beziehung

$$D_F(q) = 2 - H(q) \quad (13)$$

kann die Größe der ,Fraktalen Dimension - DF' ermittelt werden. Mit dem ermittelten Wert DF kann der Schädigungs- bzw. Ermüdungszustand des Werkstoffs ermittelt werden.

Für eine solche fraktale Analyse können die integrierten Intensitätssignale IS der detektierten Speckle-Intensitäten nach Gleichung (14) genutzt werden.

$$IS = \sum_{n=1}^{n_{max}} S_{n,i,j} - \bar{S}_{i,j} \quad (14)$$

nmax ist dabei die Anzahl der zeitlich nachfolgend mit einer Arrayanordnung erfassten Bilder eines Videos und gibt die Zeitabhängigkeit an. Sn,i,j ist der Grauwert des Speckle-Intensitätssignals im n-ten Bild, wobei i und j die Koordinaten des Pixels in den Speckle-Mustern sind. $\bar{S}_{i,j}$ ist der Mittelwert der Zeitreihe von Grauwerten des Speckle-Interitätssignals im i- und j-ten Pixel. Die Integration der Intensitätssignalzeitreihe unterdrückt die Störsignale, wie z. B. die Luftkonvektion bei einer Flammenerwärmung.

Für eine Datenreihe IS kann die Differenz-Korrelations-funktion C entsprechend der Gleichung (9) definiert als

$$C(\tau) = \frac{1}{n_{max}} \sum_{n=1}^{n_{max}} \sum_{i=1}^{i_{max}} \sum_{j=1}^{j_{max}} \left( \langle IS(t+\tau,i,j) - IS(t,i,j) \rangle^q \right) \qquad (13)$$

berechnet werden, wobei $\tau$ einem Zeitversatz entspricht. Das fraktale Verhalten wird nach Gleichung (10) beschrieben und die fraktale Dimension aus Gleichung (11) berechnet.

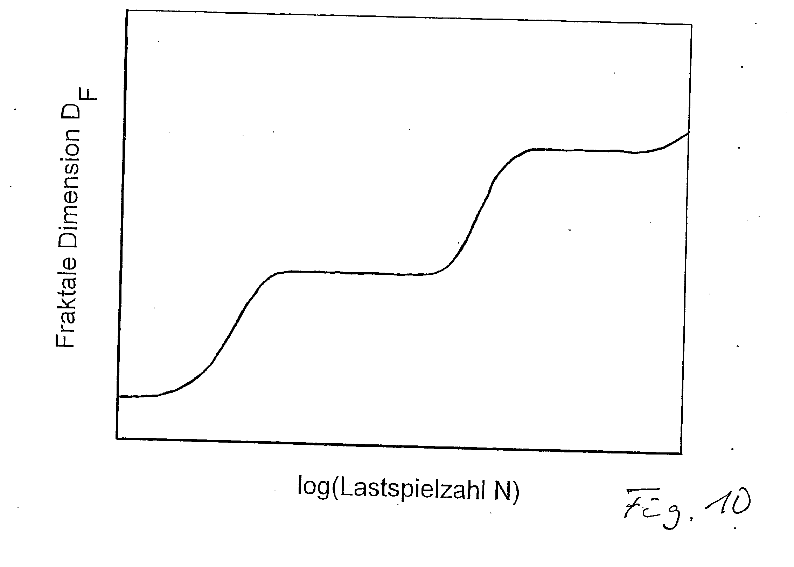

Das Profil der DF-Werte dargestellt in Abhängigkeit von der Lastspielzahl (N) bewertet den Ermüdungszustand der Probe. Zur Demonstration dient die Skizze in Figur 10, die ein ansteigend-stufenförmiges Verhalten bei wachsender Lastspielzahl zeigt. Die bei wachsender Ermüdung signifikanten Plateaus der fraktalen Dimension DF können verschiedenem Skalenverhalten der Verformungsstrukturen des untersuchten Werkstoffs zugeordnet werden. Ähnlich kann für die kontinuierliche Überwachung von kritischen Komponenten vorgegangen werden. Dabei wird DF nach gleicher Vorgehensweise in definierten Zeitabständen bestimmt. Aus dem Verlauf der fraktalen Dimension DF während der Untersuchungen kann der Schädigungszustand ermittelt werden.

Das erfindungsgemäße Verfahren kann berührungslos mit Hilfe eines robusten kostengünstigen optischen Aufbaus, der sich für verschiedene Anwendungszwecke einfach realisieren lässt, durchgeführt werden. Die erreichbare Ortsauflösung kann durch Variation der Größe der bestrahlten Oberfläche. Z.B. der Größe des Brennflecks eines Laserstrahls vom Mikro- bis in den Makrobereich, beeinflusst werden.

Es tritt kein Einfluss der Oberflächenrauheit auf. Zumindest ist er vernachlässigbar. Dies trifft auch auf den Einfluss von Rand- und Geometriefaktoren zu.

Bei der Durchführung der Messung ist keine Schutzgasatmosphäre oder es sind keine Vakuumbedingungen erforderlich.

Die Messung kann an allen optisch undurchsichtigen sowie an allen nicht ideal reflektierenden Oberflächen durchgeführt werden.

Optisch transparente Werkstoffe können mittels Beschichtung einer Messung zugänglich gemacht werden.

Messungen können auch bei erhöhten Temperaturen, im Sekundentakt und damit online-fähig durchgeführt werden. Einsetzbare Strahlungsquellen sind, z.B. Laser mit angepasster Wellenlänge oder vergleichbare im sichtbarem Bereich der elektromagnetischen Strahlung emittierende Quellen.

Als Arrayanordnung mit geeigneten Detektoren können kostengünstig einfache CCD-Kameras eingesetzt werden.

Nachfolgend soll die Erfindung beispielhaft nähere erläutert werden.

Dabei zeigen:

Figur 1     Flussdiagramm zur Durchführung des erfindungsgemäßen Verfahrens mittels Speckle-Photometrie;

Figur 2     schematisch einen Aufbau zur Durchführung des erfindungsgemäßen Verfahrens mit thermischer und/oder mechanischer Aktivierung;

Figur 3     Schematische Darstellungen von Speckle;

Figur 4     Typische Speckle-Bilder bei Bestrahlung mit von drei unterschiedlichen Laserquellen emittierter elektromagnetischer Strahlung mit Wellenlängen von 405 nm, 633 nm und 1064 nm;

Figur 5     Schematische Darstellungen der Veränderung der Speckle-Muster während der thermischen Aktivierung der Probenoberfläche unter lokaler Erwärmung;

Figur 6     Ein Diagramm der Abhängigkeit der Speckle-Diffusivität K von der Härte des Werkstoffs für unterschiedliche Werkstoffe;

Figur 7     Beispiele für die aus der Kalibrierung/dem Vergleich anhand der Speckle-Diffusivität K bestimmte Härte;

Figur 8     Abhängigkeit der Speckle-Diffusivität K in Abhängigkeit von der Porosität von Werkstoffen;

Figur 9     mechanische Spannungsänderungen, die aus der absoluten Speckle-Diffusivität K berechnet wurden und

Figur 10    Schematische Darstellung zur theoretischen Abhängigkeit der fraktalen Dimension DF von der Lastspielzahl N.

In Figur 1 ist ein Ablauf für die Durchführung des erfindungsgemäßen Verfahrens in Form eines Flussdiagramms gezeigt.

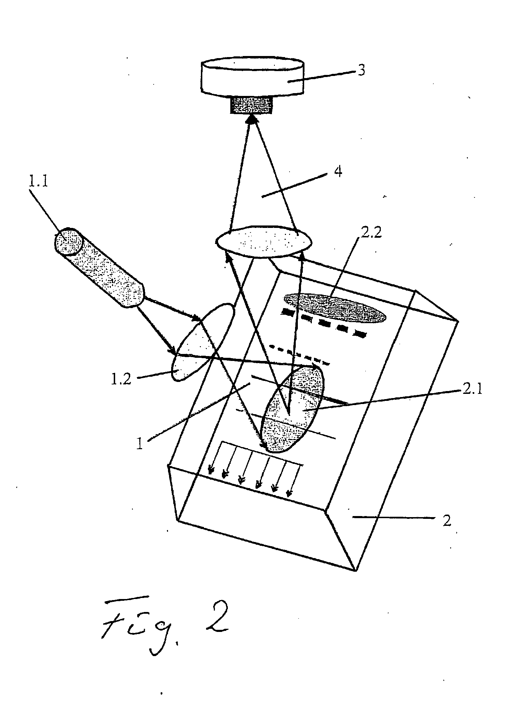

In schematisierter Darstellung zeigt Figur 2 einen Aufbau zur Durchführung des erfindungsgemäßen Verfahrens mit lokaler thermischer und/oder mechanischer Aktivierung. Dabei wird an der Oberfläche einer Probe 2 eine Bestrahlung mit kohärenter elektromagnetischer Strahlung 1, die bei dem Beispiel von einer Laserquelle 1.1 auf einen bestrahlten Bereich 2.1 der Oberfläche der Probe 2 mit einem Winkel von 45 ° gerichtet wird. Für die Strahlformung und die Beeinflussung der Größe der Fläche des bestrahlten Bereichs 2.1 ist eine optische Linse 1.2 im Strahlengang angeordnet.

In einem Abstand zum bestrahlten Oberflächenbereich 2.1 erfolgt eine thermische Aktivierung. Diese kann durch Bestrahlung der Fläche 2.2 erreicht werden. Dabei wird der Werkstoff der Probe 2 erwärmt und durch Wärmeleitung verändert sich die Oberfläche ausgehend von der Fläche 2.2 und dies erfolgt auch in den bestrahlten Oberflächenbereich 2.1.

Dieser bestrahlte Oberflächenbereich 2.1 wird dabei teilweise oder vollständig auf der oberhalb zur Oberfläche angeordneten CCD-Kamera, als ein Beispiel einer Arrayanordnung optischer Detektoren 3, abgebildet. Die Erfassung der Abbildung mit den durch Speckle an der bestrahlten Oberfläche 2.1 optisch detektierbaren Intensitäten erfolgt dabei zeit- und ortsaufgelöst. Dementsprechend werden für unterschiedliche Positionen jeweils zeitgleich erfasste Intensitäten, der vom bestrahlten Oberflächenbereich 2.1 emittierten elektromagnetischen Strahlung, nämlich dem Speckle-Muster erfasst, und dann kann eine Auswertung mit zu späteren Zeiten erfassten Intensitätsmesswerten an den jeweils gleichen Positionen mit gleichen Positionskoordinaten Intensitätsmesswerten durchgeführt werden.

Die CCD-Kamera 3 kann dabei eine Bilderfassungsrate von mindestens 10 Bilder/Sekunde, bevorzugt mindestens 25 Bilder/Sekunde aufweisen.

Typische Speckle-Bilder bei Bestrahlung mit von drei unterschiedlichen Laserquellen emittierter elektromagnetischer Strahlung mit Wellenlängen von 405 nm, 633 nm und 1064 nm sind in Figur 4 gezeigt. Diese Abbildungen wurden mit einer schnellen CCD-Kamera bei gleichen Kameraeinstellungen: Pixeltakt 25 MHz; Bildrate 10 Bilder/Sekunde, Belichtungszeit 50 ms; Bildeinstellung, ohne Optimierung aufgenommen.

Schematische Darstellungen der Veränderung der Speckle-Muster während der thermischen Aktivierung der Probenoberfläche unter lokaler Erwärmung sind Figur 5 entnehmbar. Es wurde eine thermische Aktivierung durch eine Bestrahlung der Fläche 2.2 vorgenommen. Für die Bestrahlung des bestrahlten Oberflächenbereichs 2.1 wurde ein He-Ne-Laser, der Strahlung mit einer Wellenlänge von 633 nm emittiert eingesetzt. Der bestrahlte Oberflächenbereich hatte eine Fläche von 100 * 100 Pixel der CCD-Kamera.

Die Erfassung der vom bestrahlten Oberflächenbereich 2.1 emittierten elektromagnetischen Strahlung erfolgte mit einer CCD-Kamera mit den Einstellungen: Pixeltakt 25 MHz; Bildrate 5 Bilder/Sekunde; Belichtungszeit 50 ms; Bildeinstellung: keine Optimierung.

Mit dem in Figur 6 gezeigten Diagramm kann die Abhängigkeit der Härte eines untersuchten Werkstoffs von der erfindungsgemäß ermittelten Speckle-Diffusivität K erkannt werden.

Die Erfassung der in Folge der Speckle von der Oberfläche des bestrahlten Oberflächenbereichs 2.1 emittierten elektromagnetischen Strahlung erfolgte mit einer CCD-Kamera mit eingestelltem Pixeltakt von 245 MHz, einer Bilderfassungsrate 50 Bilder/Sekunde, Belichtungszeit 10 ms. Für die Bestrahlung des bestrahlten Oberflächenbereichs 2.1 wurde der He-Ne-Laser und für die thermische Aktivierung ein Laser, der elektromagnetische Strahlung mit einer Wellenlänge von 1064 nm bei einer Energie von 2 W über eine Zeit von 0,5 s emittiert und auf die Fläche 2.2 richtet, eingesetzt.

Dieser Sachverhalt ist für einen einfachen Baustahl und für mechanisch veränderte Oberflächenschichten bei Ni- und Ti- Legierungen wieder gegeben. Dabei handelte es sich um die unlegierten Einsatz- und Vergütungsstähle C35 und C60 sowie den Federstahl C75. Es wurden eine Nickelbasislegierung mit Chrom (INCONEL) und eine Titanlegierung Ti6 Al4 V untersucht.

Analog zur Härte zeigt das Diagramm nach Figur 8 den Zusammenhang zwischen Speckle-Diffusivität K und Porosität für unterschiedliche Werkstoffe. Dies erfolgte bei einer Probe 2 aus einem Aluminium-Schaum (AlCuZn) zwischen zwei Platten aus diesem Werkstoff und zwei Proben 2 aus jeweils einer Kupfer-Faser-Struktur. Eine Faserstruktur 1 war aus dem Werkstoff Cu 99,9 und eine Faserstruktur 2 aus dem Werkstoff Cu-E 99,9 gebildet. Auch diese waren zwischen zwei Platten angeordnet. Die Messungen erfolgten zwischen den Platten.

Für die thermische Aktivierung wurde eine Flamme auf die Fläche 2.2 über einen Zeitraum von 3 s gerichtet, bis eine Temperatur an der Oberfläche von 80 ° C erreicht worden ist.

Die optische Detektion erfolgte mit den Parametern, die zu Figur 6 bereits genannt worden sind.

Figur 9 soll die Abhängigkeit der Speckle-Diffusivität K und mechanischen Spannungen verdeutlichen. Dabei erfolgte eine mechanische Aktivierung mit Zugkräften und gleichzeitig eine thermische Aktivierung mit einer Flamme, die auf die Fläche 2.2 über einen Zeitraum von 3 s gerichtet und eine Oberflächentemperatur an der Fläche von 180 ° C erreicht worden ist. Die Zugkraft griff dabei an beiden Enden einer Flachzugprobe an. Die Größe der dadurch entstandenen mechanischen Spannung entspricht jeweils den Werten in x-Achsrichtung, die Zugkraft wird direkt an der Maschine eingestellt.

Für die Bestrahlung des bestrahlten Oberflächenbereichs 2.1 und die Detektion mit Erfassung wurden wieder die Parameter, wie bei den Beispielen gemäß der Figuren 6 und 8 gewählt. Die untersuchte Probe 2 war aus dem höherfesten Baustahl H52 gebildet.

Mit Figur 10 soll die theoretische und berührungslos bestimmbare Abhängigkeit der Lastspielzahl N von der fraktalen Dimension DF verdeutlicht werden.

**Patentansprüche**

1. Verfahren zur berührungslosen, zerstörungsfreien Bestimmung der Härte, Porosität und/oder mechanischer Spannungen an Werkstoffen oder Verbundwerkstoffen mittels Speckle-Photometrie, bei dem kohärente elektromagnetische Strahlung (1) mit einem definierten Einfallswinkel auf einen Oberflächenbereich eines Bauteils oder einer Probe (2) gerichtet ist und der durch die Bestrahlung beleuchtete Oberflächenbereich (2.1) auf einer mindestens zweidimensionalen Arrayanordnung optischer Detektoren (3) abgebildet wird und

   eine thermische und/oder mechanische Aktivierung am Bauteil oder der Probe (2) in einem Abstand zum bestrahlten Oberflächenbereich an einer Fläche (2.2) durchgeführt wird; wobei mit der Arrayanordnung (3) die Intensität von Speckle elektromagnetischer Strahlung (4), die in Folge der Bestrahlung von der Oberfläche emittiert wird, zeit- und ortsaufgelöst und mindestens zweidimensional in der Ebene der Oberfläche des Bauteils oder der Probe detektiert wird und daraus der absolute Betrag der Speckle-Diffusivität K bestimmt und mit

$$K(t) = \frac{\partial I(t,x,y,z)\big/\partial t}{\partial^2 I(t,x,y,z)\big/\partial x^2 + \partial^2 I(t,x,y,z)\big/\partial y^2 + \partial^2 I(t,x,y,z)\big/\partial z^2}$$

   berechnet wird, wobei I = I(t,x,y,z) die Intensität der Speckle als Funktion der Zeit und den Messkoordinaten am Messort ist und

   dann mit der bestimmten Speckle-Diffusivität K und vorab mit einem anderen Messverfahren für den jeweiligen Werkstoff oder Werkstoffverbund bestimmten Referenzwerten die jeweilige Härte, Porosität und/oder mechanische Spannung bestimmt wird.

2. Verfahren nach Anspruch 1, **dadurch gekennzeichnet, dass** die Intensität von Speckle elektromagnetischer Strahlung (4), die in Folge der Bestrahlung von der Oberfläche emittiert wird bei mindestens zwei Zeitpunkten bestimmt wird.

3. Verfahren nach einem der vorhergehenden Ansprüche, **dadurch gekennzeichnet, dass** die thermische Leitfähigkeit aus der Speckle-Diffusivität K bestimmt wird.

4. Verfahren nach einem der vorhergehenden Ansprüche, **dadurch gekennzeichnet, dass** die ortsaufgelöste Bestimmung mindestens dreidimensional in der Ebene der Oberfläche des Bauteils oder der Probe (2), durch eine definierte Bewegung der Arrayanordnung (4) in Bezug zum bestrahlten Oberflächenbereich (2.1), durchgeführt wird.

5. Verfahren nach einem der vorhergehenden Ansprüche, **dadurch gekennzeichnet, dass** kohärente elektromagnetische Strahlung (1) mit unterschiedlichen Wellenlängen eingesetzt wird.

6. Verfahren nach einem der vorhergehenden Ansprüche, **dadurch gekennzeichnet, dass** die Bestimmung der Härte, Porosität und mechanischer Spannungen mit durch Regression ermittelten Werten für die Speckle-Diffusivität K und den mit anderen Messverfahren bestimmten Referenzwerten durchgeführt wird.

7. Verfahren nach einem der vorhergehenden Ansprüche, **dadurch gekennzeichnet, dass** die thermische und/oder mechanische Aktivierung kontinuierlich oder gepulst durchgeführt wird.

8. Verfahren nach einem der vorhergehenden Ansprüche, **dadurch gekennzeichnet, dass** die elektromagnetische Strahlung (1) mit einem Einfallswinkel von 45 ° ± 20 ° in Bezug zur Oberfläche des Bauteils oder der Probe (2) auf den bestrahlten Oberflächenbereich gerichtet wird.

9. Verfahren nach einem der vorhergehenden Ansprüche, **dadurch gekennzeichnet, dass** die elektromagnetische Strahlung (1) kollimiert auf die Oberfläche des Bauteils oder der Probe (2) gerichtet wird.

10. Verfahren nach einem der vorhergehenden Ansprüche, **dadurch gekennzeichnet, dass** die Schädigung oder Ermüdung des Werkstoffs mit Ermittlung der fraktalen Dimension DF bestimmt wird.

## Claims

1. A method for contactless, non-destructive determination of the hardness, porosity and/or mechanical stresses on materials or composite materials by means of speckle photometry, in which coherent electromagnetic radiation (1) is directed at a defined angle of incidence onto a surface region of a component or a sample (2) and the surface region (2.1) illuminated by the irradiation is imaged on an at least two-dimensional array arrangement of optical detectors (3), and
a thermal and/or mechanical activation is carried out on the component or the sample (2) at a distance from the irradiated surface region on a surface (2.2); wherein
with the array arrangement (3) the intensity of speckle electromagnetic radiation (4) which is emitted as a consequence of the irradiation of the surface is detected in time-resolved and spatially-resolved manner and at least two-dimensionally in the plane of the surface of the component or the sample, and the absolute amount of the speckle diffusivity K is determined therefrom, and is calculated with

$$K(t) = \frac{\partial I(t,x,y,z)/\partial t}{\partial^2 I(t,x,y,z)/\partial x^2 + \partial^2 I(t,x,y,z)/\partial y^2 + \partial^2 I(t,x,y,z)/\partial z^2}$$

wherein I= I(t,x,y,z) is the intensity of the speckle as a function of time and the measurement coordinates at the measuring point, and
then the respective hardness, porosity and/or mechanical stress is determined with the determined speckle diffusivity K and reference values determined beforehand with a different measuring method for the respective material or material composite.

2. A method according to Claim 1, **characterised in that** the intensity of Speckle electromagnetic radiation (4) which is emitted as a consequence of the irradiation of the surface is determined at at least two moments.

3. A method according to one of the preceding claims, **characterised in that** the thermal conductivity is determined from the speckle diffusivity K.

4. A method according to one of the preceding claims, **characterised in that** the spatially-resolved determination is carried out at least three-dimensionally in the plane of the surface of the component or the sample (2), by a defined movement of the array arrangement (4) relative to the irradiated surface region (2.1).

5. A method according to one of the preceding claims, **characterised in that** coherent electromagnetic radiation (1) with different wavelengths is used.

6. A method according to one of the preceding claims, **characterised in that** the determination of the hardness, porosity and mechanical stresses is carried out with values, established by regression, for the speckle diffusivity K and the reference values determined with other measuring methods.

7. A method according to one of the preceding claims, **characterised in that** the thermal and/or mechanical activation is carried out continuously or in pulsed manner.

8. A method according to one of the preceding claims, **characterised in that** the electromagnetic radiation (1) is directed onto the irradiated surface region at an angle of incidence of 45° ± 20° in relation to the surface of the component or the sample (2).

9. A method according to one of the preceding claims, **characterised in that** the electromagnetic radiation (1) is directed in collimated manner onto the surface of the component or the sample (2).

10. A method according to one of the preceding claims, **characterised in that** the damage or fatigue of the material is determined with establishing the fractal dimension DF.

**Revendications**

1. Procédé servant à déterminer sans contact, de manière non destructive, la dureté, la porosité et/ou les tensions mécaniques de matériaux ou de matériaux composites au moyen d'une photométrie de speckle, dans lequel un rayonnement (1) électromagnétique cohérent est orienté, selon un angle d'incidence défini, sur une zone de surface d'un composant ou d'un échantillon (2), dans lequel la zone de surface (2.1) éclairée par le rayonnement est reproduite sur un ensemble en réseau au moins bidimensionnel de détecteurs optiques (3) et dans lequel une activation thermique et/ou mécanique est effectuée au niveau d'une face (2.2) sur le composant ou l'échantillon (2) à une distance définie de la zone de surface exposée au rayonnement ;

l'intensité de speckle de rayonnement (4) électromagnétique qui est émis suite à l'exposition de la surface au rayonnement, étant détectée, au moyen de l'ensemble en réseau (3), avec une résolution temporelle et spatiale, et au moins de manière bidimensionnelle dans le plan de la surface du composant ou de l'échantillon et, à partir de cette donnée, la valeur absolue de la diffusivité de speckle K étant déterminée et calculée à l'aide de l'équation qui suit

$$K(t) = \frac{\partial I(t,x,y,z)/\partial t}{\partial^2 I(t,x,y,z)/\partial x^2 + \partial^2 I(t,x,y,z)/\partial y^2 + \partial^2 I(t,x,y,z)/\partial z^2},$$

I = I(t,x,y,z) étant l'intensité de speckle en tant que fonction du temps et des coordonnées de mesure sur le lieu de mesure, puis des valeurs de référence déterminées à l'aide de la détermination de la diffusivité de speckle K et d'une autre méthode de mesure mise en oeuvre au préalable pour chaque matériau ou matériau composite permettent de déterminer respectivement la dureté, la porosité et/ou la tension mécanique.

2. Procédé selon la revendication 1, **caractérisé en ce que** l'intensité de speckle du rayonnement électromagnétique (4), qui est émis suite à l'exposition de la surface au rayonnement, est déterminée à au moins deux moments.

3. Procédé selon l'une quelconque des revendications précédentes, **caractérisé en ce que** la conductivité thermique est déterminée à partir de la diffusivité de speckle K.

4. Procédé selon l'une quelconque des revendications précédentes, **caractérisé en ce que** la détermination à résolution locale est effectuée au moins de manière tridimensionnelle dans le plan de la surface du composant ou de l'échantillon (2) par un mouvement défini de l'ensemble en réseau (4) par rapport à la zone de surface (2.1) exposée au rayonnement.

5. Procédé selon l'une quelconque des revendications précédentes, **caractérisé en ce que** le rayonnement (1) électromagnétique cohérent est utilisé avec diverses longueurs d'ondes.

6. Procédé selon l'une quelconque des revendications précédentes, **caractérisé en ce que** la détermination de la dureté, de la porosité et des tensions mécaniques est effectuée à l'aide de valeurs déterminées par régression pour la diffusivité de speckle K et à l'aide des valeurs de référence déterminées à l'aide d'autres méthodes de mesure.

**7.** Procédé selon l'une quelconque des revendications précédentes, **caractérisé en ce que** l'activation thermique et/ou mécanique est effectuée en continu ou de manière pulsée.

**8.** Procédé selon l'une quelconque des revendications précédentes, **caractérisé en ce que** le rayonnement (1) électromagnétique est orienté sur la zone de surface exposée au rayonnement selon un angle d'incidence de 45° ± 20° par rapport à la surface du composant ou de l'échantillon (2).

**9.** Procédé selon l'une quelconque des revendications précédentes, **caractérisé en ce que** le rayonnement (1) électromagnétique est orienté de manière collimatée sur la surface du composant ou de l'échantillon (2).

**10.** Procédé selon l'une quelconque des revendications précédentes, **caractérisé en ce que** l'endommagement ou l'usure du matériau est déterminé(e) à l'aide de la détermination de la dimension fractale DF.

EP 2 580 570 B1

| | | | |
|---|---|---|---|
| a. Versuchsaufbau | → b. Beleuchten der Oberfläche | → c. Thermisches oder mechanisches Anregen | → d. Aufnahme der Speckle-Bewegung durch Intensitätsmessung |

| | | |
|---|---|---|
| g. Ergebnisausgabe | ← f. Datenauswertung | ← e. Datenaufbereitung |

Fig. 1

Fig. 2

Kohärentes Licht (Laser)

Streuzentren
(Oberflächenunebenheiten)

Interferenzerscheinungen
von kohärentem Licht im
Fernfeld

Fig. 3

17

Fig. 4

Bewegung der Speckle

Zeit t

Fig. 5

Fig. 6

Fig. 7

Fig. 8

Fig. 9

Fraktale Dimension $D_F$

log(Lastspielzahl N)

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1746385 A1
- EP 1400779 A1
- EP 1472531 A1
- US 20080317090 A1
- RU 2371700 C1